# FASCICULE DE BREVET EUROPEEN

(11) **EP 0 556 362 B1**
(45) Date de publication et mention de la délivrance du brevet: **08.01.1997**
(21) Numéro de dépôt: 92918292.1
(22) Date de dépôt: 19.08.1992
(51) Int. Cl.: B01D 24/16, B01D 24/46

(54) **PROCEDE ET DISPOSITIF POUR LA FILTRATION D'UN LIQUIDE CONTENANT DES PARTICULES EN SUSPENSION**
VERFAHREN UND ANLAGE ZUR FILTRIERUNG EINER FLUESSIGKEIT, DIE SUSPENDIERTE TEILCHEN ENTHAELT
METHOD AND DEVICE FOR THE FILTRATION OF A LIQUID CONTAINING SUSPENSION PARTICLES

(30) Priorité: 28.08.1991 FR 9110675
(43) Date de publication de la demande: 25.08.1993
(73) Titulaire: DUVEAU, Jean, F-91810 Vert-le-Grand (FR); HOUBE, Pierre, F-75004 Paris (FR)
(72) Inventeur: DUVEAU, Jean, F-91810 Vert-le-Grand (FR); HOUBE, Pierre, F-75004 Paris (FR)
(74) Mandataire: Pieraerts, Jacques
(86) Numéro de dépôt international: FR9200805
(87) Numéro de publication internationale: WO9304760

(56) Documents cités:
- FR-A- 2 255 935
- GB-A- 2 124 921
- US-A- 2 792 116
- US-A- 4 290 894
- US-A- 4 882 052

## Description

L'invention se rapporte à un dispositif, et également à l'utilisation dudit dispositif, pour la filtration d'un liquide contenant des particules et matières en suspension, ce dispositif comprenant un corps et une enceinte (1,11) emplie partiellement d'un lit d'un agent filtrant (10), cette enceinte comprenant un moyen (4) d'alimentation en liquide à filtrer et un moyen (5) d'évacuation du liquide filtré, le moyen d'alimentation et le moyen d'évacuation étant respectivement disposés en amont et en aval du lit d'agent filtrant (10), ledit agent filtrant comprenant des fragments d'une matière plastique expansée, déformable élastiquement, à cellules ouvertes ou semi-ouvertes, ayant une masse spécifique comprise entre 20 et 50 kg/m³ et d'une dimension comprise entre 0,1 et 2,5 mm, les fragments de matière plastique ayant un volume maximum d'environ 8 cm³ à l'état non comprimé, l'agent filtrant étant, de plus, logé dans une cartouche cylindrique amovible (11) logée dans l'enceinte cylindrique (1) du dispositif et comprenant un corps cylindrique à paroi latérale étanche, fermée à ses deux extrémités par des plaques circulaires, respectivement (6) et (7), percées d'orifices identiques (9) répartis régulièrement sur leur surface.

Dans son brevet américain n° 4 427 551, l'un des demandeurs a décrit un système pour la clarification d'un milieu liquide contenant des particules. Ce système comprend:
a) un moyen pour alimenter, avec un courant continu d'un milieu liquide contenant la matière particulaire, un premier séparateur dans lequel la matière ayant un diamètre nominal supérieur à environ 3 millimètres est éliminée du courant;
b) une pompe pour exercer une pression sur le courant provenant du premier séparateur et des conduits réunissant la pompe à ce premier séparateur et à un second séparateur pressurisé;
c) un second séparateur pressurisé, apte à éliminer du courant de liquide sous pression les matériaux ayant un diamètre nominal inférieur à environ 3 millimètres et supérieur à environ 75 micromètres;
d) des moyens de contrôle du débit, et des conduits associés, pour recevoir le liquide provenant du second séparateur, les moyens de contrôle comprenant des moyens pour maintenir une pression et un débit sensiblement constants dans le second séparateur;
e) une vanne à trois voies et des conduits associés pour recevoir le liquide provenant des moyens de contrôle de débit et pour recycler sous la commande de ceux-ci une partie du liquide au premier séparateur;
f) un filtre pressurisé pour matière fine et des conduits associés pour recevoir le courant de liquide pressurisé provenant de la vanne à trois voies, ce filtre pour matière fine comprenant un milieu filtrant qui retient et sépare du courant de liquide les particules ayant un diamètre nominal supérieur à environ un micromètre;
g) un moyen d'évacuation associé au filtre de matière fine pour fournir un courant de liquide clarifié;
h) un moyen de commande de débit, associé au moyen d'évacuation, pour commander la vanne à trois voies en vue de maintenir le débit de liquide dans le filtre de matière fine dans des limites prédéterminées.

Un tel système se prête au traitement en continu d'eaux usées, en régime continu ou discontinu, pour éliminer toutes les particules de dimension supérieure à 1 micromètre environ et pour récupérer ou recycler l'eau ainsi clarifiée.

Une floculation du liquide traité peut être prévue avant tout traitement ou après le second séparateur, avant passage du liquide dans le filtre pour matière fine. Des agents de floculation usuels, tels que du sulfate d'aluminium peuvent être utilisés.

La présente invention vise à proposer un dispositif de filtration qui puisse être utilisé comme filtre pour matière fine du système de clarification selon le brevet US 4 427 551, étant entendu que ce dispositif peut être appliqué à toute autre opération de filtration, pour retenir des particules de dimension supérieure à environ un micromètre.

L'invention vise également à proposer un dispositif de filtration qui puisse être nettoyé et débarrassé des particules retenues, par simple inversion du sens du liquide qui le traverse.

Le problème qui consiste à débarrasser le milieu filtrant des impuretés accumulées a été évoqué dans les brevets GB-A-2 124 921, US-A-4 290 894, FR-A-2 225 935.

Pour réaliser ces objectifs conformément à l'invention, le dispositif comprend une troisième plaque circulaire (8) disposée sur le corps (1) du filtre en amont de la plaque (6), dans le sens d'écoulement du liquide à filtrer, cette plaque étant perforée d'orifices (9) répartis suivant des couronnes circulaires concentriques, la partie centrale de la plaque (8), limitée par la couronne de plus petit rayon, étant elle-même perforée d'orifices, la densité d'orifices par unité de surface étant plus faible dans la partie centrale que dans la couronne de plus petit rayon et dans cette dernière que dans la couronne de plus grand rayon.

La matière plastique cellulaire sera par exemple constituée au moins partiellement de polyuréthane expansé, préparé à partir d'un éther ou d'un ester. On utilisera, par exemple, des blocs à surface externe irrégulière ou, dans le cas de particules ultrafines, une matière cellulaire déchiquetée, afin d'accroître la surface de contact avec le liquide à traiter et d'éviter la formation de courants préférentiels de ce liquide entre fragments de matière plastique. La masse spécifique apparente de la matière plastique cellulaire utilisée pourra varier suivant les effets désirés et suivant la nature du milieu liquide et des particules à séparer. En général, toutefois, cette masse spécifique sera comprise entre 20 et 50 kg/m³. Il est bien connu que les masses spécifiques des matières plastiques cellulaires varient de ± 15 % par rapport à la valeur moyenne indiquée par le fabricant.

Un avantage d'une telle matière plastique expansée, à cellules ouvertes ou semi-ouvertes, est qu'elle est insoluble et imputrescible dans l'eau, les hydrocarbures, le chlore et les solvants usuels (à une concentration de 10% au maximum, pour des raisons de sécurité).

Un autre avantage du milieu filtrant constitué par une telle matière plastique expansée est qu'elle peut être traversée par le liquide à filtrer avec une vitesse élevée.

De préférence, afin de permettre un décolmatage et un lavage facile et rapide du milieu filtrant, les fragments de matière plastique cellulaire à cellules ouvertes ou semi-ouvertes rempliront au plus un tiers du volume interne de l'enceinte cylindrique, lorsque celle-ci est traversée par un liquide exerçant sur le milieu filtrant une pression d'environ 10⁵ Pascals (1 bar).

En vue d'obtenir une filtration optimum du liquide à traiter, l'épaisseur du milieu filtrant, dans l'enceinte du dispositif, sous une pression de liquide de 10⁵ Pascals, sera avantageusement d'au moins 30 cm.

De préférence, les particules contenues dans le liquide à traiter auront une dimension inférieure à 100 microns a l'entrée du filtre, car des particules de taille supérieure ne se séparent pas facilement du milieu filtrant, lors du décolmatage de celui-ci à l'aide d'un courant de liquide chargé ou non en particules, circulant en sens inverse du liquide à épurer.

Avant filtration, le liquide à épurer aura pu subir ou non un traitement de floculation, suivant les matières en suspension à retenir et le degré de clarification désiré.

Le liquide à filtrer pourra traverser le dispositif conforme à l'invention avec des vitesses élevées, de l'ordre de 35 à 150 m/h, sous une pression relative d'environ 10⁵ Pascals (1 bar).

Dans une forme de réalisation particulièrement intéressante la matière plastique expansée se présente sous forme de blocs à surface externe irrégulière ou de fragments déchiquetés.

D'autres détails et avantages de l'invention ressortiront de la description qui sera donnée d'un dispositif pour la filtration d'un liquide, selon l'invention. Cette description n'est donnée qu'à titre d'exemple et ne limite pas l'invention. Les notations de référence se réfèrent aux figures ci-annexées.

Une forme de réalisation du dispositif conforme à l'invention sera décrite ci-après, à titre d'exemple non limitatif, en référence aux dessins annexés. Sur ces dessins:
La figure 1 est une coupe verticale de l'enceinte cylindrique du dispositif conforme à l'invention, lorsque celui-ci est en cours d'utilisation ;

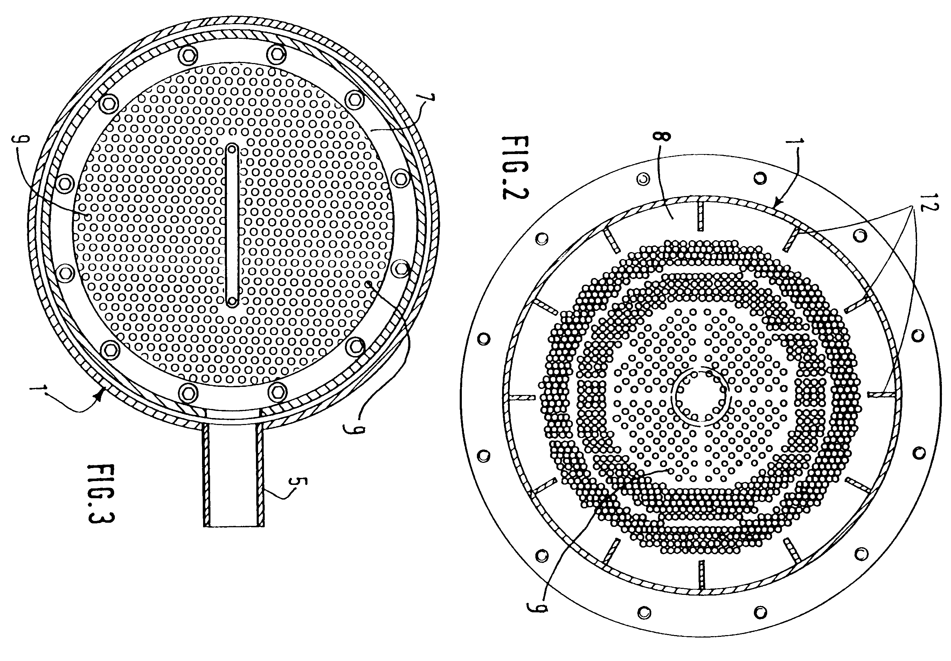

La figure 2 est une vue en coupe suivant la ligne II-II de la figure 1 ;
La figure 3 est une vue en coupe suivant la ligne III-III de la figure 1.

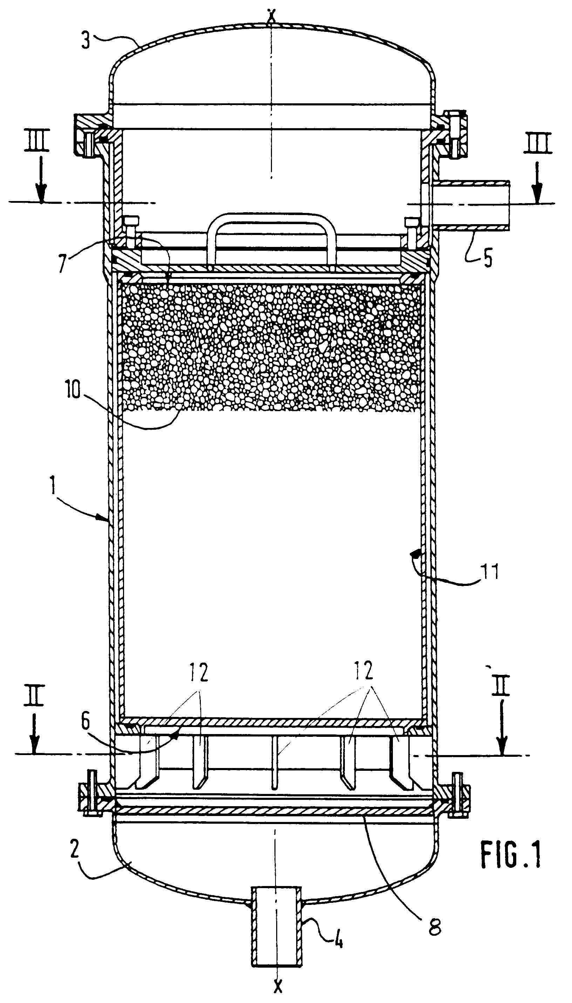

Comme on le voit sur cette figure 1, le dispositif conforme à l'invention comprend une enceinte cylindrique 1 d'axe X-X, disposée verticalement et fermée à ses deux extrémités par des parties en forme de dôme, respectivement 2 et 3. Le dôme 2 est disposé à l'extrémité amont de l'enceinte et, dans sa partie centrale, débouche axialement un conduit 4 d'alimentation en liquide à filtrer. A l'extrémité aval de l'enceinte 1, un conduit 5 d'évacuation du liquide filtré débouche à travers la paroi latérale.

L'enceinte 1 est de préférence disposée verticalement, avec le dôme 2 et le conduit 4 disposés à sa base.

L'agent filtrant est constitué de fragments 10 de matière plastique expansée déformable élastiquement, à cellules ouvertes ou semi-ouvertes, en forme de blocs à surface externe irrégulière ou de parties déchiquetées, suivant les utilisations du dispositif, logés dans une cartouche cylindrique amovible 11. Sous une pression de liquide de un bar, les fragments 10 ne remplissent qu'environ un tiers du volume de la cartouche 11. Celle-ci comprend une paroi latérale étanche et est fermée à chacune de ses extrémité de plaques circulaires, respectivement 6 et 7, percées d'orifices répartis régulièrement sur toute la surface.

Une plaque 8, disposée en amont sur le corps du filtre, dans le sens du déplacement du liquide à filtrer, est percée d'orifices 9, répartis régulièrement en sa partie centrale et suivant deux couronnes concentriques. La densité des orifices est plus importante dans la couronne la plus proche de l'axe X-X du cylindre que dans la partie centrale, et également plus importante dans la couronne la plus éloignée de l'axe X-X que dans l'autre couronne. Comme on le voit, dans la partie centrale, les orifices sont répartis suivant quatre quadrants distincts.

Les plaques 6,7 disposées en amont et en aval de la cartouche sont percées d'orifices 9 répartis régulièrement sur toute leur surface.

Du côté de la face externe de la plaque 6, au voisinage immédiat de celle-ci, sont disposés régulièrement des renforts 12 parallèles à l'axe X-X, fixés sur la face interne de la paroi latérale de l'enceinte 1.

Pour décolmater la matière plastique expansée servant de milieu filtrant, on décollera d'abord le gâteau de matière filtrante en injectant dans l'enceinte 1 un courant d'air comprimé, à une pression de 6.10⁵ Pascals par exemple, en sens inverse du courant précédent de liquide à filtrer, comme décrit dans le brevet U.S. N° 4 427 551. Dans un deuxième temps, on injectera dans l'enceinte 1 de l'eau propre ou non et de l'air comprimé, toujours en sens inverse du courant de liquide à filtrer, pour laver et rincer le milieu filtrant.

L'exemple suivant illustre d'efficacité d'une filtration effectuée à l'aide du dispositif conforme à l'invention.

### EXEMPLE

Dans cet essai, on a filtré à l'aide du dispositif décrit ci-dessus, de l'eau de la Meuse, préalablement floculée à l'aide de sulfate d'alumine, à raison de 25 g/m³.

Le dispositif utilisé avait une section utile de 310 mm de diamètre et une longueur utile de 1 m (distance séparant les plaques 6 et 7).

La matière plastique expansée était du polyuréthane à cellules ouvertes d'une densité de 26 kg/m³, déchiquetée en fragments d'une dimension maximum de l'ordre de 5 cm³ avec des cellules d'une dimension maximum de 0,2 à 2,5 mm.

Le débit d'eau traitée était de 135 l/mm, avec une pression à l'extrémité aval de la matière filtrante de 1,5 bar et une perte de charge totale de 0,55 bar. Dans ces conditions, l'épaisseur de matière filtrante ainsi comprimée, traversée par l'eau, était de 40 cm.

Les caractéristiques de l'eau, avant et après filtration, sont rassemblées dans le Tableau suivant.

**TABLEAU**

| | Eau de Meuse non traitée | Eau de Meuse traitée |
|---|---|---|
| pH | 7,45 | 7,32 |
| DCO | 75 mg/l | 9,4 mg/l |
| Turbidité | 355 NTU | 0,46 NTU |
| Dureté | 44° français | 30° français |
| Ammoniaque | 1,1 mg azote/l | 0,33 mg azote/l |
| Azote total | 20,2 mg/l | 11,5 mg/l |
| Matière en suspension | 1,537 g/l | <1 mg/l |
| Résidu sec (à 105°C) | 1,829 g/l | 0,46 g/l |
| DBO | 5 mg/l | 2,9 mg/l |
| Aspect | trouble, brunâtre | limpide, incolore |
| Germes totaux (par ml) | 80 000 | 3 |
| Coliformes totaux (par ml) | 12 500 | 0 |

Ce tableau met en évidence l'efficacité du dispositif de filtration conforme à l'invention et, ce qui est tout-à-fait inattendu, son aptitude à éliminer la quasi-totalité des bactéries présentes dans l'eau traitée.

## Revendications

1. Dispositif pour la filtration d'un liquide contenant des particules et matières en suspension, ce dispositif comprenant un corps et une enceinte (1,11) emplie partiellement d'un lit d'un agent filtrant (10), cette enceinte comprenant un moyen (4) d'alimentation en liquide à filtrer et un moyen (5) d'évacuation du liquide filtré, le moyen d'alimentation et le moyen d'évacuation étant respectivement disposés en amont et en aval du lit d'agent filtrant (10), ledit agent filtrant comprenant des fragments d'une matière plastique expansée, déformable élastiquement, à cellules ouvertes ou semi-ouvertes, ayant une masse spécifique comprise entre 20 et 50 kg/m³ et d'une dimension comprise entre 0,1 et 2,5 mm, les fragments de matière plastique ayant un volume maximum d'environ 8 cm³ à l'état non comprimé, l'agent filtrant étant, de plus, logé dans une cartouche cylindrique amovible (11) logée dans l'enceinte cylindrique (1) du dispositif et comprenant un corps cylindrique à paroi latérale étanche, fermée à ses deux extrémités par des plaques circulaires, respectivement (6) et (7), percées d'orifices identiques (9) répartis régulièrement sur leur surface, **caractérisé en ce que** le dispostif comprend une troisième plaque circulaire (8) disposée sur le corps (1) du filtre en amont de la plaque (6), dans le sens d'écoulement du liquide à filtrer, cette plaque étant perforée d'orifices (9) répartis suivant des couronnes circulaires concentriques, la partie centrale de la plaque (8), limitée par la couronne de plus petit rayon, étant elle-même perforée d'orifices, la densité d'orifices par unité de surface étant plus faible dans la partie centrale que dans la couronne de plus petit rayon et dans cette dernière que dans la couronne de plus grand rayon.

2. Dispositif selon la revendication 1, caractérisé en ce que la matière plastique expansée se présente sous forme de blocs à surface externe irrégulière ou de fragments déchiquetés.

3. Utilisation d'un dispositif selon les revendications 1 et 2 pour la filtration d'un milieu liquide, notamment d'eau usée, contenant des particules et des matières en suspension.

4. Utilisation selon la revendication 3, caractérisée en ce que le liquide à filtrer circule dans le lit d'agent filtrant (10) à une vitesse de l'ordre de 35 à 100 m/h, sous une pression relative d'environ 10⁵ Pascals.

5. Utilisation selon l'une des revendications 3 et 4, caractérisée en ce que, pour décolmater le lit d'agent filtrant (10), on fait circuler à travers celui-ci, en sens inverse du milieu liquide à filtrer, un mélange d'un liquide sensiblement exempt de toute particule, additionné de gaz comprimé.

6. Utilisation selon l'une des revendications 3 - 5, caractérisée en ce que, sous une pression de liquide d'environ 10⁵ Pascals, l'agent filtrant (10) n'occupe qu'environ un tiers du volume de la cartouche (11) contenue dans l'enceinte (1).

## Claims

1. Device for the filtration of a liquid containing particles and matter in suspension, this device comprising a body and an enclosure (1, 11) partially filled with a layer of filtration agent (10), this enclosure comprising a means (4) of supplying the liquid to be filtered and a means (5) of evacuating the filtered liquid, the means of supply and the means of evacuation being arranged respectively upstream and downstream of the layer of filtration agent (10), the said filtration agent consisting of fragments of expanded plastic material, elastically deformable, with open or semi-open cells, having a specific mass (relative density?) of between 20 and 50 kg/m³ and between 0.1 and 2.5 mm in size, the fragments of plastic material having a maximum volume of approximately 8cm³ in the uncompressed state, the filtration agent, moreover, being seated in a movable cylindrical cartridge (11) fitting in the cylindrical enclosure (1) of the device and comprising a cylindrical body with a watertight side wall, closed at each end by circular plates (6) and (7) respectively, perforated with identical holes (9) distributed at regular intervals over their surfaces, characterised in that the device comprises a third circular plate (8) placed on top of the body (1) of the filter upstream of plate (6) in the direction of flow of the liquid to be filtered, this plate being perforated with holes (9) arranged in concentric circular rings, the central part of the plate (8) limited by the ring with the smallest diameter, itself being perforated with holes, the density of holes per unit area being lower in the central part than in the ring with the smaller radius and in this latter than in the larger radius ring.

2. Device according to Claim 1, wherein the expanded plastic material is present in the form of blocks with irregular external surfaces or jagged fragments.

3. Use of a device according to Claims 1 and 2, for the filtration of a liquid medium, specifically waste water, containing particles and matter in suspension.

4. Use according to Claim 3, wherein the liquid to be filtered flows through the layer of filtration agent (10) at a rate of the order of 35 to 100 metres per hour at a relative pressure of approximately 10⁵ Pascals.

5. Use according to one of Claims 3 and 4, wherein in order to "unclog" the layer of filtration agent (10), a mixture of a liquid appreciably free of any particles and a compressed gas is made to flow through it in the opposite direction to the liquid medium to be filtered.

6. Use according to one of Claims 3 to 5, wherein, under a liquid pressure of approximately 10⁵ Pascals, the filtration agent (10) occupies only one third of the volume of the cartridge (11) contained in the enclosure (1).

## Patentansprüche

1. Anlage zur Filtrierung einer Flüssigkeit, die suspendierte Teilchen und Stoffe enthält, mit einem Körper und einem Mantel (1, 11), der teilweise mit einem Bett aus einem Filtriermittel (10) gefüllt ist, wobei der Mantel eine Einrichtung (4) zum Zuführen einer zu filtrierenden Flüssigkeit und eine Einrichtung (5) zum Entnehmen der filtrierten Flüssigkeit aufweist, wobei die Zuführeinrichtung und die Entnahmeeinrichtung stromaufwärts bzw. stromabwärts bezüglich des Betts des Filtriermittels (10) angeordnet sind, wobei dieses Filtriermittel Bruchstücke eines expandierten Kunststoffs, der elastisch verformbar ist, mit offenen oder halboffenen Zellen mit einer spezifischen Masse zwischen 20 und 50 kg/m³ und mit einer Abmessung zwischen 0,1 und 2,5 mm aufweist, wobei die Kunststoff-Bruchstücke im nicht zusammengedrückten Zustand ein maximales Volumen von ungefähr 8 cm³ aufweisen, wobei das Filtriermittel außerdem in einer unbeweglichen, zylindrischen Kartusche (11) untergebracht ist, die im Zylindermantel (1) der Anlage liegt und einen zylindrischen Körper mit dichter Seitenwand aufweist, der an seinen beiden Enden (6) bzw. (7) mit kreisförmigen Platten verschlossen ist, die von identischen Öffnungen (9) durchsetzt sind, die regelmäßig über deren Flächen verteilt sind, **dadurch gekennzeichnet**, daß die Anlage eine dritte kreisförmige Platte (8) aufweist, die auf dem Körper (1) des Filters stromaufwärts bezüglich der Platte (6) in der Fließrichtung der zu filtrierenden Flüssigkeit angeordnet ist, wobei diese Platte von Öffnungen (9) durchsetzt ist, die gemäß kreisförmigen, konzentrischen Grenzen verteilt sind, wobei der zentrale Teil der Platte (8) durch den Kranz mit kleinerem Radius begrenzt wird und er selbst von Öffnungen durchsetzt ist, wobei die Dichte der Öffnungen pro Einheitsfläche im zentralen Teil kleiner als im Kranz mit dem kleineren Radius ist, und sie in diesem letzteren kleiner als im Kranz mit dem größeren Radius ist.

2. Anlage nach Anspruch 1, **dadurch gekennzeichnet**, daß der expandierte Kunststoff in Form von Blöcken mit unregelmäßiger Oberfläche oder in Form zerrissener Bruchstücke vorliegt.

3. Verwendung einer Anlage nach einem der Ansprüche 1 oder 2 zur Filtrierung eines flüssigen Mediums, insbesondere von Brauchwasser, das suspendierte Teilchen und Stoffe enthält.

4. Verwendung nach Anspruch 3, **dadurch gekennzeichnet**, daß die zu filtrierende Flüssigkeit im Bett des Filtriermittels (10) mit einer Geschwindigkeit in der Größenordnung von 35 bis 100 m/h bei einem Relativdruck von ungefähr 10⁵ Pascal umläuft.

5. Verwendung nach einem der Ansprüche 3 oder 4, **dadurch gekennzeichnet**, daß zum Regenerieren des Betts aus Filtriermittel (10) durch dieses in der Richtung umgekehrt zu der des zu filtrierenden, flüssigen Mediums eine Mischung aus einer Flüssigkeit, die im wesentlichen frei von jeglichen Teilchen ist, zu der komprimiertes Gas hinzugefügt ist, umgewälzt wird.

6. Verwendung nach einem der Ansprüche 3 - 5, **dadurch gekennzeichnet**, daß bei einem Flüssigkeitsdruck von ungefähr 10⁵ Pascal das Filtriermittel (10) nur ungefähr ein Drittel des Volumens der im Mantel (1) aufgenommenen Kartusche (11) einnimmt.
